# EUROPEAN PATENT SPECIFICATION

(11) **EP 3 885 101 B1**
(45) Date of publication and mention of the grant of the patent: **02.11.2022**
(21) Application number: 21164318.4
(22) Date of filing: 23.03.2021
(51) Int. Cl.: B29C 45/76, G01N 21/88

(54) **MOLDING PRODUCT INSPECTION DEVICE AND INJECTION MOLDING SYSTEM**
FORMPRODUKTINSPEKTIONSVORRICHTUNG UND SPRITZGIESSSYSTEM
DISPOSITIF D'INSPECTION D'UN PRODUIT DE MOULAGE ET SYSTÈME DE MOULAGE PAR INJECTION

(30) Priority: 24.03.2020 JP 2020053122
(43) Date of publication of application: 29.09.2021
(73) Proprietor: Sumitomo Heavy Industries, Ltd., Tokyo 141-6025 (JP)
(72) Inventor: XIN, Zhang, Kanagawa, 237-8555 (JP)
(74) Representative: Louis Pöhlau Lohrentz

(56) References cited:
- EP-A1- 2 458 371
- WO-A1-2019/194064
- JP-A- 2008 051 558
- US-A1- 2019 258 225

## Description

### BACKGROUND OF THE INVENTION

### Field of the Invention

The present invention relates to a molding product inspection device used for an injection molding machine that injects a molding material into a mold unit to manufacture a molding product, and an injection molding system including the same.

### Description of Related Art

In general, in order to manufacture a molding product by using an injection molding machine, a molding material such as a resin material is melted and injected into a cavity inside a mold unit, and the molding material in a molten state is cooled and solidified in the cavity. In this manner, the molding product having a shape corresponding to the cavity of the mold unit can be obtained.

In the molding product manufactured in this way, particularly a surface thereof may have a defect such as a recessed sink mark due to a molding failure. In particular, in a case of the molding product having the sink mark, depending on a location, a shape, or a size of the sink mark, it is greatly different to determine whether the molding product is a quality product or a defective product. Therefore, even when height information on a surface of the molding product is acquired by a three-dimensional measuring machine, it is difficult to clearly set a determination reference. In addition, it may be difficult to identify quality of the molding product by simple image processing. Under a current situation, in many cases, a skilled worker visually inspects each molding product, and determines the quality, based on the worker's own reference.

As an image processing technique for a mold unit used for an injection molding machine, Japanese Unexamined Patent Publication No. 2005-125561 discloses an image processing technique. Japanese Unexamined Patent Publication No. 2005-125561 discloses "a mold monitoring device including (a) an image input unit that acquires an image of a mold surface of a movable mold or a stationary mold of a molding machine, (b) a reference image database that stores a reference image previously acquired by the image input unit, (c) a discrimination processing unit that compares a discrimination target image acquired by the image input unit with the reference image to perform discrimination processing, and determines whether or not the discrimination target image has an abnormality, and (d) an erroneous discrimination candidate database that stores an erroneous discrimination candidate region which causes erroneous discrimination in the discrimination processing". United States Patent Publication No. 2019/0258225 discloses an inspection system and method implementing non-contact, three-dimensional scanning of physical objects. Japanese Unexamined Patent Publication No. 2008-051558 discloses a visual inspection method and a visual inspection device. European Patent Publication No. 2 458 371 discloses a quality control method and a quality control apparatus. International Patent Publication No. WO 2019/194064 discloses an appearance inspection method and an appearance inspection system.

### SUMMARY OF THE INVENTION

Incidentally, manually inspecting the molding product manufactured by the injection molding machine as described above not only causes degraded productivity. In addition, the manual inspection may lead to an increase in costs due to labor costs, and may result in quality variations depending on each person's inspection capacity. Therefore, it is desirable to automate the inspection of the molding product.

On the other hand, an appearance inspection of the molding product greatly depends on knowledge or methods empirically accumulated by a skilled worker so far. As an example, in the appearance of the molding product, whereas there are locations such as a design surface where the presence or absence of a defect greatly affects the quality of the molding product, there are locations where the defect is tolerated to some extent. In the appearance inspection, it is necessary to determine that the presence or absence of the defect does not need to be carefully checked at locations other than the design surface.

When information relating to the appearance of the molding product is acquired to check everywhere in the appearance, based on the information without considering this specific point of the appearance inspection for the molding product, a processing load of a computer extremely increases. In addition, in a case where machine learning is used, a requiring amount of learning data enormously increases. On the other hand, when a light automatic inspection is performed on the whole appearance of the molding product, accuracy in detecting the defect is lowered.

The present invention is made to solve the problem, and an obj ect of the present invention is to provide a molding product inspection device and an injection molding system which are capable of relatively accurately detecting a defect caused by a molding failure in automating an inspection of a molding product, while suppressing an increase in a processing load to some extent.

A molding product inspection device that can solve the above-described problem is used for an injection molding machine that manufactures a molding product by injecting a molding material into a mold unit. The molding product inspection device includes an acquisition unit that acquires target appearance information relating to an appearance of the molding product serving as an inspection target, and a processing unit that divides the appearance in the target appearance information into a plurality of divided regions, and determines importance of each of the divided regions by weighting, in which the processing unit performs more machine learning on one or more divided regions determined to be of relatively higher importance out of the plurality of divided regions, than at least one of other divided regions.

In addition, an injection molding system includes an injection molding machine that manufactures a molding product by injecting a molding material into a mold unit, and the above-described molding product inspection device.

According to the molding product inspection device and injection molding system which are described above, it is possible to relatively accurately detect a defect caused by a molding failure in automating the inspection of the molding product, while suppressing an increase in a processing load to some extent.

### BRIEF DESCRIPTION OF THE DRAWINGS

FIG. 1 is a sectional view illustrating an example of an injection molding machine capable of using a molding product inspection device according to an embodiment of the present invention.
FIG. 2 is a plan view illustrating an example of an injection molding system including the injection molding machine in FIG. 1.
FIG. 3 is a block diagram of the molding product inspection device included in the injection molding system in FIG. 2.
FIGS. 4A and 4B are images illustrating a partial appearance of a molding product, and an image subjected to processing for dividing the image into a plurality of divided regions by using a processing unit of the molding product inspection device in FIG. 3.
FIGS. 5A and 5B are images conceptually illustrating a state where a determination processing load is changed for the image in FIGS. 4A and 4B by an abnormality determination unit of the molding product inspection device in FIG. 3.

### DETAILED DESCRIPTION OF THE INVENTION

Hereinafter, embodiments according to the present invention will be described in detail with reference to the drawings.

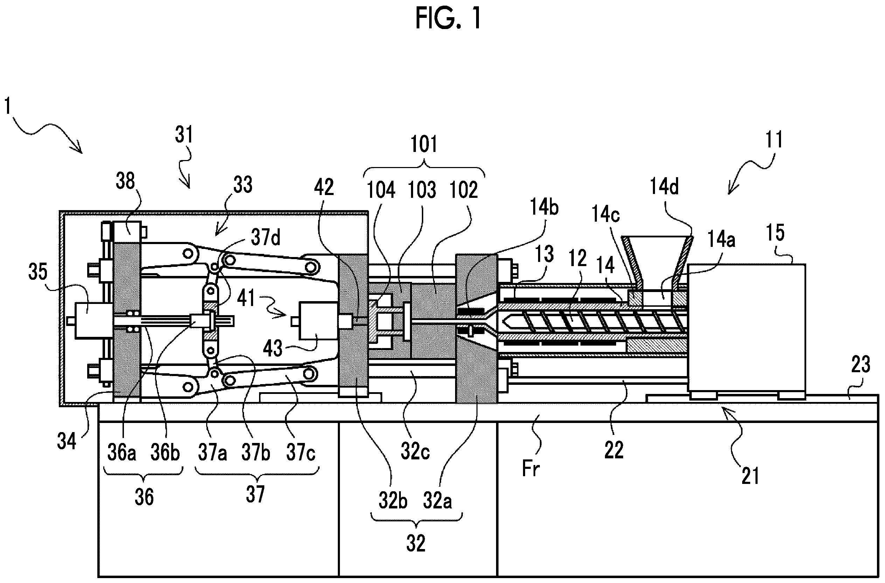

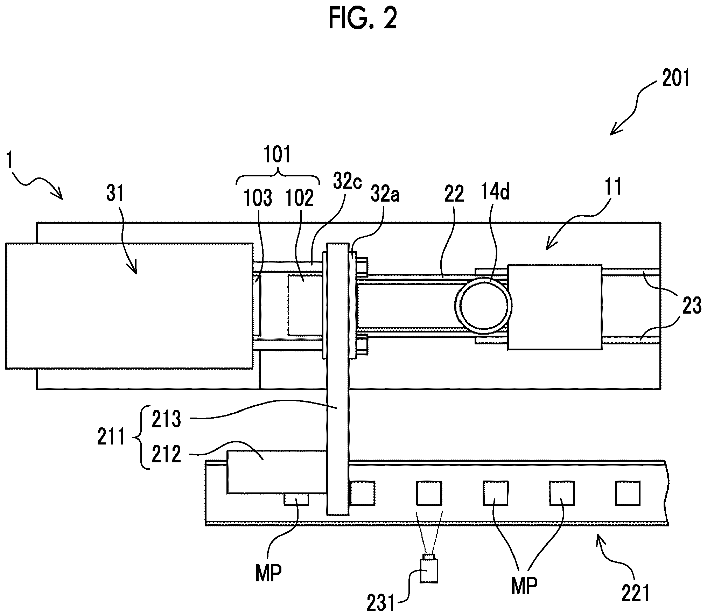

A molding product inspection device according to an embodiment of the present invention can be used in inspecting a molding product manufactured by using an injection molding machine 1 as illustrated in FIG. 1. For example, the molding product manufactured by the injection molding machine 1 is taken out from a mold unit 101 attached to the injection molding machine 1 by an injection molding system 201 as illustrated in a plan view in FIG. 2, and is fed to a subsequent process in some cases. The injection molding system 201 includes a molding product inspection device that inspects an appearance of a molding product MP taken out from the mold unit 101. In this manner, the injection molding system 201 can automatically inspect the appearance of the molding product MP to determine quality thereof.

### (Injection Molding System)

In addition to the injection molding machine 1 and the molding product inspection device which are described above, the illustrated injection molding system 201 includes a molding product take-out machine 211 that takes out the molding product MP from the mold unit 101 in a mold opening state, a molding product conveyance machine 221 that conveys the molding product MP delivered from the mold unit 101 by the molding product take-out machine 211, and an image capturing device 231 that captures an image of the molding product MP conveyed onto the molding product conveyance machine 221.

Out of these machines, the injection molding machine 1 injects a molding material which is mainly a resin material such as a thermoplastic resin in a molten state into a cavity inside the mold unit 101, and cools and solidifies the molding material in the cavity, thereby manufacturing the molding product MP. The cavity of the mold unit 101 is formed in a shape corresponding to the molding product MP to be manufactured by the injection molding machine 1. In this manner, it is possible to manufacture the molding product MP having a predetermined shape corresponding to the cavity of the mold unit 101.

In general, the injection molding machine 1 illustrated in FIG. 1 includes an injection unit 11 that melts the molding material and injects the molding material into the mold unit 101 by rotating and advancing an internally disposed screw 12 and heating of a circumferentially disposed heater 13, and injects the molding material into the mold unit 101, a moving unit 21 that displaces the injection unit 11 to advance and retreat with respect to the mold unit 101, a mold clamping unit 31 that opens and closes the mold unit 101 between a mold clamping state and a mold opening state, and an ejector unit 41 that takes out the molding product MP from the mold unit 101 in the mold opening state.

In the illustrated example, the mold unit 101 used for the injection molding machine 1 has a stationary mold 102 and a movable mold 103 in which the cavity is internally partitioned and formed in the mold clamping state, and a movable member 104 such as an ejector pin displaced by the ejector unit 41 to extrude and detach the molding product MP. This mold unit 101 can be referred to as a two-plate mold mainly divided into the stationary mold 102 and the movable mold 103, but further can have a slide mold, a slide core, or a stripper plate, and can be a three-plate mold divided into three parts. The mold unit 101 can be appropriately attached to or replaced with the injection molding machine 1 in accordance with a shape of the molding product MP to be manufactured. Here, the mold unit 101 is not considered as a part of the injection molding machine 1.

In addition, the molding product take-out machine 211 illustrated in FIG. 2 includes an arm 212 provided with a chuck for holding the molding product MP, and a horizontal moving mechanism 213 that moves the arm 212 in a horizontal direction (upward-downward direction in FIG. 2). However, the molding product take-out machine is not limited thereto, and can have various configurations as long as the molding product MP can be taken out from the mold unit 101 in a mold opening state.

The molding product conveyance machine 221 can be a belt conveyor or other conveyors. The image capturing device 231 can be a camera that can capture an image of the molding product MP placed on the molding product conveyance machine 221.

As an example of a molding process for manufacturing the molding product MP by using the injection molding system 201, a predetermined amount of the molding material is already plasticized and disposed inside the injection unit 11 in the latter half of the previous molding process. In this state, a mold clamping process is performed so that the mold unit 101 is closed to be in a mold clamping state by using the mold clamping unit 31.

Subsequently, the molding material is injected into the mold unit 101 by advancing the screw 12, thereby sequentially performing a filling process of filling the molding material into the cavity of the mold unit 101, and a holding pressure process of holding the molding material inside a tip part of the injection unit 11 at a predetermined pressure by further advancing the screw 12.

Thereafter, the molding material filling the cavity of the mold unit 101 is cooled and solidified, thereby performing a cooling process of obtaining the molding product MP. In this case, the molding material separately loaded into the injection unit 11 is melted while being fed toward the tip part of the injection unit 11 by rotating the screw 12 under heating of the heater 13, thereby performing a plasticizing process of filling the tip part with a predetermined amount of the molding material.

Thereafter, the mold clamping unit 31 is operated to open and bring the mold unit 101 into a mold opening state, and the movable member 104 is moved by the ejector unit 41, thereby performing a take-out process of taking out the molding product MP from the mold unit 101. In the take-out process, the molding product MP taken out from the mold unit 101 by the ejector unit 41 is taken out from the mold unit 101 while being held by a chuck of the arm 212 of the molding product take-out machine 211. As illustrated in FIG. 2, the arm 212 is moved by the horizontal moving mechanism 213 so that the molding product MP is fed onto the molding product conveyance machine 221. Thereafter, while the molding product MP is conveyed onto the molding product conveyance machine 221, an image is captured by the image capturing device 231 in an intermediate portion thereof.

### (Molding Product Inspection Device)

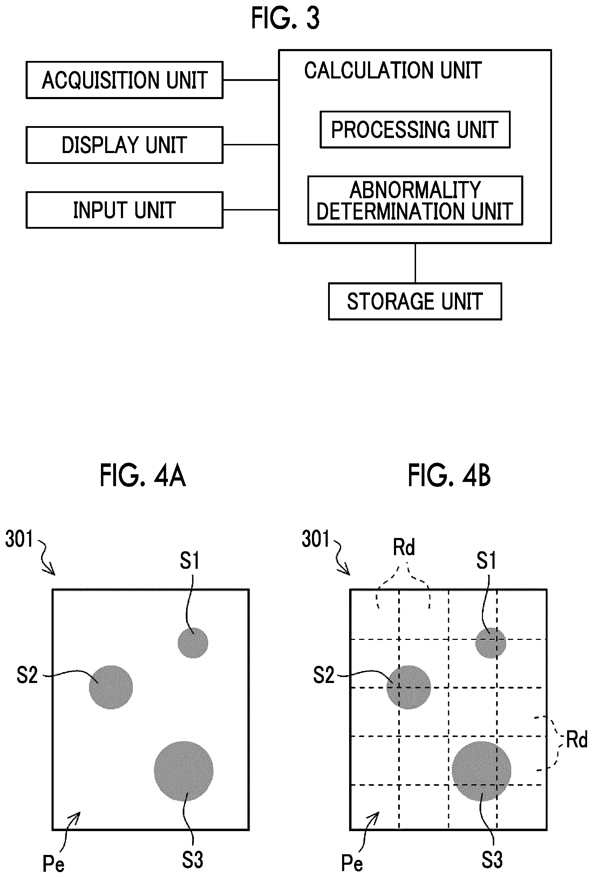

As illustrated in FIG. 3, the molding product inspection device has an acquisition unit that acquires target appearance information relating to an appearance of the molding product MP serving as an inspection target, and a calculation unit that performs a predetermined calculation on the target appearance information. The calculation unit includes a processing unit that performs required processing. As will be described later, it is preferable that the calculation unit further includes an abnormality determination unit for determining the presence or absence of an abnormality in the appearance of the molding product MP from the target appearance information, and detects a defect in the molding product MP.

It is preferable that the molding product inspection device additionally has a storage unit for storing information or data, and an input unit used by a user of the injection molding machine 1 to input user input information. In addition, the molding product inspection device may further have a display unit that visually transmits various information to the user. For example, the display unit and at least a part of the input unit may be a touch panel. However, the present invention is not limited thereto, and the display unit and the input unit may be separated from each other.

Here, the target appearance information acquired by the acquisition unit can be image information obtained by imaging the appearance of the molding product MP and/or height information of each surface portion on the appearance of the molding product MP measured by a three-dimensional measuring machine. The image information as the target appearance information can be obtained by the image capturing device 231 which images the molding product MP conveyed onto the molding product conveyance machine 221.

With respect to the target appearance information acquired by the acquisition unit in this way, the processing unit divides the appearance of the molding product MP of the target appearance information into a plurality of divided regions, and performs a process of determining importance of each of the divided regions by weighting. The importance herein means the importance of the inspection, and represents a degree (level) of a load applied to the inspection by the molding product inspection device. The divided region having the relatively high importance needs to be sufficiently checked by the molding product inspection device. On the other hand, the divided region having the relatively lower importance does not need to be checked so much by the molding product inspection device.

Specifically, for example, in a case where the acquisition unit acquires an image 301 of an appearance Pe in which sink marks S1 to S3 appear in a part of the molding product MP as illustrated in FIG. 4A, the processing unit divides the appearance Pe of the image 301 into a plurality of divided regions Rd as illustrated by a broken line in FIG. 4B. Here, as an example, the image 301 is divided in a grid shape into four portions in the horizontal direction (rightward-leftward direction in FIGS. 4A and 4B) and five portions in the vertical direction (upward-downward direction in FIGS. 4A and 4B) by the divided regions Rd having a substantially square shape. The image 301 can be divided by using various methods without being limited to the illustrated example, and a size and/or a shape of the divided region Rd can be changed as appropriate.

Then, the processing unit determines the importance of each of the divided regions Rd by weighting. The weighting can be performed from various viewpoints as will be subsequently described.

For example, when a skilled worker inspects the molding product MP, visual line measurement (eye tracking) is performed. As visual line information, a time and/or the number of times of stopped visual lines at each location including a location at which the worker gazes or a location at which the worker does not gaze in the appearance Pe of the molding product MP are collected. The visual line information is collected from one or more workers. This visual line information can be stored in advance in the storage unit. Then, the processing unit can use the visual line information as one of weighting criteria. In this manner, sensory determination criteria performed so far by the skilled worker can be incorporated into the inspection performed by the molding product inspection device.

In addition, the processing unit can weight each of the divided regions Rd, based on the user input information previously input by the user from the input unit and stored in the storage unit. The user input information may include design surface information relating to whether or not the appearance portion included in the predetermined divided region Rd out of the divided regions Rd configures a design surface of the molding product MP. In a case where the appearance portion included in the predetermined divided region Rd configures the design surface, the processing unit can set the importance of the divided region Rd to be higher than the importance of other divided regions Rd. Alternatively, when the appearance portion included in the predetermined divided region Rd does not configure the design surface, the processing unit can set the importance of the divided region Rd to be lower than the importance of other divided regions Rd. The design surface information can be used for weighting in two stages with regard to whether or not the appearance portion is the design surface. In contrast, depending on the molding product MP, it may be difficult to clearly distinguish whether or not the appearance portion is the design surface. Accordingly, in some cases, the design surface information may be used for weighting in a three or more stages with regard to what extent the appearance portion is likely to be the design surface.

In addition, the processing unit can weight each of the divided regions Rd, based on a defective location of the molding product MP manufactured in the past by using the injection molding machine 1 and/or another injection molding machine. The weighting may be performed, based on a test result in the past. In addition, as learning data, the processing unit may perform weighting by machine learning by using the inspection result in the past. For example, in a case where it is empirically known that a defect caused by a molding failure are likely to appear in a specific divided region Rd out of the plurality of divided regions Rd, the defective location is stored in the storage unit. Based on the information, the processing unit can perform the weighting so that the importance of the specific divided region Rd is higher than the importance of other divided regions Rd.

As described above, after the weighting is performed by the processing unit from various viewpoints and the importance of each of the divided regions Rd is determined, while changing a processing load required for determining each of the divided regions Rd in accordance with the importance of each of the divided regions Rd which is determined by the processing unit, the abnormality determination unit can determine the presence or absence of the abnormality in each of the divided regions Rd in the target appearance information. The abnormality determination unit can decrease the processing load required for determining the divided region Rd determined by the processing unit to be of relatively lower importance, than the processing load required for determining at least one of other divided regions Rd, and can perform relatively light processing to determine the divided region Rd which has the relatively lower importance. On the other hand, the abnormality determination unit can increase the processing load required for determining the divided region Rd determined by the processing unit to be of relatively higher importance, than the processing load required for determining at least one of other divided regions Rd, and can perform relatively heavy processing to determine the divided region Rd which has the relatively high importance.

According to this configuration, the processing load is decreased on the divided region Rd which has the lower importance and does not require a careful check. Accordingly, an increase in the overall processing load is suppressed. In addition, the load is increased on the divided region Rd which has the high importance and requires sufficient check. In this manner, it is possible to accurately detect a defect caused by a molding failure.

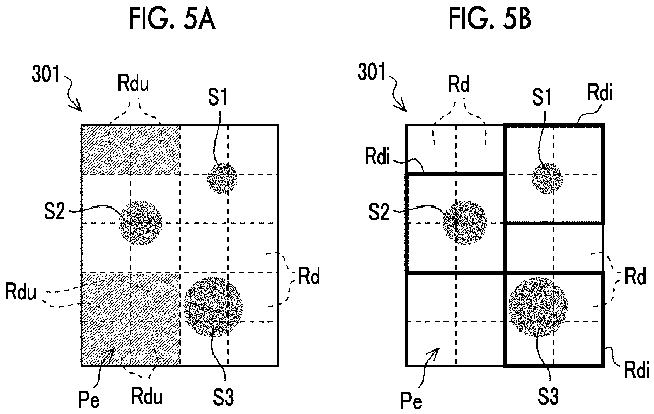

The abnormality determination unit can set one or more divided regions determined by the processing unit to be of relatively lower importance out of the plurality of divided regions Rd, as a determination unnecessary region Rdu illustrated by shading in FIG. 5A, and can exclude determination unnecessary region Rdu from the determination target so that the determination is not performed. In this case, the divided regions Rd requiring the determination processing are reduced. Accordingly, the processing load can be further reduced.

In addition, the abnormality determination unit can set one or more divided regions determined by the processing unit to be of relatively higher importance out of the plurality of divided regions Rd, as an important determination region Rdi surrounded and illustrated by a thick line in FIG. 5B, and can particularly intensively check the important determination region Rdi.

The processing unit may perform machine learning by receiving learning data with regard to the appearance of the molding product MP including various defects, for example. However, it is preferable to control one or more divided regions Rd determined to be of relatively higher importance out of the plurality of divided regions Rd so that more machine learning is performed, than at least one of other divided regions Rd. In this manner, accuracy in detecting the abnormality in the divided region Rd having the high importance is improved, and accuracy in detecting the defect in the molding product MP is also improved. On the other hand, the machine learning can be reduced or may not be performed for one or more divided regions Rd determined to be of relatively lower importance. In this case, the detection accuracy can be improved with minimum required learning data.

The machine learning performed by the processing unit may be either supervised learning or unsupervised learning. As an example of the machine learning, there is deep learning (deep machine learning) using a convolutional neural network (CNN). In the convolutional neural network, a feature amount of each of the divided regions Rd in the target appearance information such as image information is extracted from a plurality of convolutional layers, and thereafter, features are classified by a plurality of fully connected layers. In this manner, the presence or absence of the abnormality in each of the divided regions Rd can be accurately detected.

Incidentally, the abnormality determination unit determines the abnormality by comparing each of the divided regions Rd of the target appearance information with each of the divided regions Rd of reference appearance information relating to the appearance of the molding product MP which is a reference of a quality product, and detecting whether or not there is the abnormality in each of the divided regions Rd of the target appearance information. The reference appearance information can be stored in advance in the storage unit, for example, as an image of the appearance of the molding product MP as the quality product.

Here, in a case where the target appearance information and the reference appearance information are used as image information relating to the appearance of the molding product MP, the abnormality determination unit can compare the target appearance information and the reference appearance information with each other by extracting a difference in at least one element of a hue, brightness, and saturation in the image in each of the divided regions Rd therebetween.

For example, in a case where the sink marks S1 to S3 are present in the appearance Pe in the image 301 acquired as the target appearance information, at a location where the sink marks S1 to S3 are present in the image 301, at least one element of the hue, the brightness, and the saturation is changed with respect to the image of the reference appearance information where the sink marks S1 to S3 are not present. In this manner, the difference generated by the presence or absence of the sink marks S1 to S3 can be extracted between the respective divided regions Rd of the target appearance information and the reference appearance information. In a case where the abnormality determination unit determines whether or not the difference is the abnormality and it is determined as the abnormality, the molding product MP serving as an inspection target is a defective product.

However, even when there is a minute defect in the appearance of the molding product MP which is less likely to be recognize with a naked eye and does not cause a problem, if it is determined that the above-described difference caused by the minute defect has the abnormality, a determination processing load cannot be sufficient reduced, and there is a possibility that the processing efficiency may be degraded. In addition, in some cases, detecting the minute defect may not be required.

With regard to the above-described problem, the storage unit can store reference difference information relating to a reference of the difference from the reference appearance information in advance, and when the abnormality determination unit determines the presence or absence of the abnormality, the abnormality determination unit can cope with the possibility by using a comparison result between the reference difference information with the difference extracted as described above. Specifically, in a case where the difference extracted between the respective divided regions Rd of the target appearance information and the reference appearance information is sufficiently smaller than a reference value which can be included in the reference difference information, the abnormality determination unit can determine that there is no abnormality, without determining that there is the abnormality.

In addition, in a case where the extracted difference is relatively greater than other reference values which can be included in the reference difference information, regardless of the determination result of other divided regions Rd, the abnormality determination unit may determine that the molding product MP serving as the inspection target is a defective product.

### (INJECTION MOLDING MACHINE)

As described above, the injection molding machine 1 illustrated as an example in FIG. 1 includes the injection unit 11, the moving unit 21, the mold clamping unit 31, and the ejector unit 41. Details of each of the units are as described below.

The injection unit 11 mainly includes a cylinder 14 having a cylindrical shape extending toward the mold unit 101, a screw 12 disposed parallel to a center axis of the cylinder 14 inside the cylinder 14, and circumferentially having a flight provided in a spiral shape, a band-shaped heater 13 disposed on an outer peripheral side of the cylinder 14 to surround a periphery thereof, and a motor box 15 disposed on a rear side of the cylinder 14 and the screw 12. Although not illustrated, in order to accumulate a predetermined amount of the molding material in a tip part of the cylinder 14, the motor box 15 is provided with a plasticizing motor that rotates the screw 12 around the center axis, an injection motor that displaces the screw 12 to advance and retreat in each direction of a direction closer to the mold unit 101 and a direction away from the mold unit 101, and a pressure detection sensor that measures a pressure received by the screw 12 from the molding material.

Here, a direction closer to a stationary platen 32a (to be described later) of the mold clamping unit 31 to which the stationary mold 102 of the mold unit 101 is attached will be referred to as a front side, and a direction separated from the stationary platen 32a will be referred to as a rear side. Therefore, in FIG. 1, when the injection unit 11 located on the right side of the stationary platen 32a is viewed, a leftward direction closer to the stationary platen 32a is the front side, and a rightward direction separated from the stationary platen 32a is the rear side.

In the cylinder 14, a feed port 14a to which a hopper 14d for loading the molding material into the cylinder 14 is attached is provided in front of the motor box 15 on the rear side, and a nozzle 14b having a smaller cross-sectional area is provided on the front side in the tip part closer to the mold unit 101. A water-cooling cylinder 14c using water cooling can be provided in the vicinity of the feed port 14a.

For example, as illustrated, the heater 13 disposed around the cylinder 14 including the periphery of the nozzle 14b is divided into a plurality of portions in an axial direction (rightward-leftward direction in FIG. 1), and the cylinder 14 inside respective heater portions can be internally heated at different temperatures.

According to the injection unit 11 having this configuration, while the molding material loaded into the cylinder 14 from the feed port 14a is melted based on the rotation of the screw 12 driven by the plasticizing motor under heating of the heater 13 on the outer peripheral side of the cylinder 14 in a plasticizing process, the molding material is fed toward the front side inside the cylinder 14, and fills the tip part of the cylinder 14. At this time, the screw 12 is displaced to retreat by the injection motor, and a space filled with the molding material is formed in the tip part of the cylinder 14. As described above, the plasticizing process can be performed during a cooling process of the previous molding process.

Thereafter, in the filling process, the screw 12 is displaced to advance. In this manner, the molding material in the tip part of the cylinder 14 is injected toward the mold unit 101 via the nozzle 14b. In addition, in a holding pressure process subsequent thereto, a pressure is applied to the molding material filling in the cavity of the mold unit 101 through the molding material remaining in the tip part of the cylinder 14. At this time, a shortage of the molding material which is caused by cooling shrinkage of the molding material can be replenished in the cavity of the mold unit 101.

The injection molding machine 1 is a line screw type. However, it is possible to adopt a pre-plastic type of the injection molding machine in which a plasticizing cylinder, a plasticizing screw, an injection cylinder, and an injection plunger are separated in view of a structure and a function.

For example, the moving unit 21 is an advancing and retreating drive mechanism provided in a lower portion of the motor box 15 of the injection unit 11 to displace the injection unit 11 to advance and retreat with respect to the stationary platen 32a (to be described later). Various mechanisms can be adopted as the advancing and retreating drive mechanism configuring the moving unit 21. However, for example, the moving unit 21 can be configured to include a double action type hydraulic cylinder that extrudes and retracts the piston rod 22 whose tip is fixed to the stationary platen 32a. The moving unit 21 further includes a slide base to which the hydraulic pump and the hydraulic cylinder which are described above are attached, and a guide 23 laid on a frame Fr to guide a linear motion of the slide base. In this manner, advancing and retreating displacement of the injection unit 11 mounted on the upper portion of the slide base is realized.

The moving unit 21 separates the injection unit 11 from the mold unit 101, or the injection unit 11 is brought closer to the mold unit 101. In this manner, it is possible to perform a so-called nozzle touch in which the nozzle 14b of the cylinder 14 of the injection unit 11 is pressed against the mold unit 101 with a predetermined pressure.

The mold clamping unit 31 displaces the movable mold 103 with respect to the stationary mold 102 of the mold unit 101 to open and close the mold unit 101, and brings the mold unit 101 into a mold clamping state, a mold closing state, or a mold opening state. The mold clamping unit 31 of the injection molding machine 1 mainly has a platen 32 disposed to pinch the mold unit 101 from both sides, and a platen operation mechanism 33 that moves the platen 32.

Here, the platen 32 includes a stationary platen 32a which is located between the injection unit 11 and the mold unit 101, and fixed to the frame Fr, and a movable platen 32b which is located away from the mold unit 101 between the stationary platen 32a and the mold unit 101, and can be displaced to move closer to and separate from the stationary platen 32a. The stationary mold 102 of the mold unit 101 located between the stationary platen 32a and the movable platen 32b is attached to the stationary platen 32a side, and the movable mold 103 is attached to the movable platen 32b side. In addition, the mold clamping unit 31 is provided with one or more tie bars 32c extending to a rear platen 34 side (to be described later) from the stationary platen 32a and connecting the stationary platen 32a and the rear platen 34 to each other. In the present embodiment, the movable platen 32b is guided by the tie bar 32c to be displaced to move closer to and separate from the stationary platen 32a. However, the movable platen 32b may not be guided by the tie bar 32c.

At a position where the movable platen 32b is separated from the stationary platen 32a, the movable mold 103 of the mold unit 101 is in a mold opening state of being open from the stationary mold 102, and the movable platen 32b is brought closer to the stationary platen 32a from the separated position. In this manner, the movable mold 103 is brought into a mold closing state of being closed to the stationary mold 102, and the movable platen 32b is brought closer to the stationary platen 32a so that the movable mold 103 is brought into a mold clamping state of being pressed against the stationary mold 102.

The major portion of the mold clamping unit 31 except for the stationary platen 32a and the ejector unit 41 (to be described later) are located on the left side of the stationary platen 32a in FIG. 1. Accordingly, when the major portion of the mold clamping unit 31 and the ejector unit 41 are viewed, the rightward direction closer to the stationary platen 32a is the front side, and the leftward direction separated from the stationary platen 32a is the rear side.

In addition, here, the platen operation mechanism 33 includes the rear platen 34 disposed on the frame Fr, a mold clamping motor 35 provided on the rear platen 34, a motion conversion mechanism 36 that converts a rotary motion of the mold clamping motor 35 into a linear motion in a displacement direction of the movable platen 32b, and a toggle mechanism 37 that increases a force transmitted to the motion conversion mechanism 36 to transmits the force to the movable platen 32b.

Out of these, the motion conversion mechanism 36 can adopt various mechanisms capable of converting the rotary motion into the linear motion. In this example, the motion conversion mechanism 36 is configured to include the screw shaft 36a rotationally driven by the mold clamping motor 35 and the nut 36b screwed to the screw shaft 36a. The motion conversion mechanism 36 can also adopt a ball screw.

The toggle mechanism 37 that increases a transmission force from the motion conversion mechanism 36 is formed by connecting a plurality of links 37a to 37c connecting the rear platen 34, the nut 36b, and the movable platen 32b to be capable of oscillating by joints.

The number of the links and the joints, and shapes thereof can be changed as appropriate. However, as illustrated in FIG. 1, a pair of link groups having links 37a to 37c located upward and downward at an interval from a crosshead 37d are connected to each other to be capable of oscillating in the crosshead 37d connected to the nut 36b and extending in the upward-downward direction.

In addition to the mold clamping motor 35 described above, a mold space adjustment motor 38 can also be provided on the rear platen 34. The mold space adjustment motor 38 functions to adjust a space between the stationary platen 32a and the rear platen 34 and movably placed on and the frame Fr by applying a rotational driving force to the screw shaft and the nut which are connected to an extension portion of each tie bar 32c of the above-described platen 32. In this manner, when the mold unit 101 is replaced or the space of the mold unit 101 is changed due to a temperature change, the mold space can be adjusted so that a desired mold clamping force can be applied to the mold unit 101. Although not illustrated, adjustment of the mold space can be realized even when the stationary platen side is movable on the frame Fr and the rear platen side is fixed.

The illustrated mold clamping unit 31 is a horizontal type in which a moving direction of the movable platen 32b is parallel to the horizontal direction, but can also adopt a vertical type in which the moving direction is a vertical direction.

The ejector unit 41 provided in the movable platen 32b has an ejector rod 42 extending to penetrate the movable platen 32b and driven to advance and retreat so that a movable member 104 of an ejector pin of the mold unit 101 is pressed from the rear side, and a rod drive source 43 including a motion conversion mechanism, for example, such as a motor and a ball screw, in order to operate the ejector rod 42.

In a molding product take-out process, the ejector unit 41 can take out the molding product from the mold unit 101 by advancing the ejector rod 42 driven by the rod drive source 43 to protrude the movable member 104 inside the mold unit 101. After the movable member 104 is protruded, the ejector rod 42 can be retreated by the rod drive source 43 to return to an original position.

### Brief Description of the Reference Symbols

1: injection molding machine
11: injection unit
12: screw
13: heater
14: cylinder
14a: feed port
14b: nozzle
14c: water-cooling cylinder
14d: hopper
15: motor box
21: moving unit
22: piston rod
23: guide
31: mold clamping unit
32: platen
32a: stationary platen
32b: movable platen
32c: tie bar
33: platen operation mechanism
34: rear platen
35: mold clamping motor
36: motion conversion mechanism
36a: screw shaft
36b: nut
37: toggle mechanism
37a to 37c: link
37d: crosshead
38: mold space adjustment motor
41: ejector unit
42: ejector rod
43: rod drive source
101: mold unit
102: stationary mold
103: movable mold
104: movable member
201: injection molding system
211: molding product take-out machine
212: arm
213: horizontal moving mechanism
221: molding product conveyance machine
231: image capturing device
301: image
MP: molding product
Pe: appearance
S1 to S3: sink mark
Rd: divided region
Rdu: determination unnecessary region
Rdi: important determination region

## Claims

1. A molding product inspection device used for an injection molding machine (1) that manufactures a molding product (MP) by injecting a molding material into a mold unit (101), the molding product inspection device comprising:
an acquisition unit configured to acquire target appearance information relating to an appearance (Pe) of the molding product (MP) serving as an inspection target; and
a processing unit configured to divide the appearance (Pe) in the target appearance information into a plurality of divided regions (Rd), and determine importance of each of the divided regions (Rd) by weighting,
**characterized in that**
the processing unit performs more machine learning on one or more divided regions (Rd) determined to be of relatively higher importance out of the plurality of divided regions (Rd), than at least one of other divided regions (Rd).

2. The molding product inspection device according to claim 1,
wherein the weighting in the processing unit is performed, based on visual line information obtained by visual line measurement in an inspection of the molding product (MP) which is performed by a worker.

3. The molding product inspection device according to claim 1 or 2,
wherein the weighting in the processing unit is performed, based on user input information input by a user.

4. The molding product inspection device according to claim 3,
wherein the user input information includes design surface information relating to whether or not an appearance portion included in a predetermined divided region (Rd) configures a design surface of the molding product (MP).

5. The molding product inspection device according to any one of claims 1 to 4,
wherein the weighting in the processing unit is performed, based on a defective location of the molding product (MP) manufactured in the past.

6. The molding product inspection device according to any one of claims 1 to 5, further comprising:
an abnormality determination unit configured to change a processing load needed to determine each of the divided regions (Rd) in accordance with the importance in determining the presence or absence of an abnormality in the target appearance information.

7. The molding product inspection device according to claim 6,
wherein a change in the processing load in the abnormality determination unit includes excluding one or more divided regions (Rd) determined by the processing unit to be of relatively lower importance out of the plurality of divided regions (Rd), from targets of the determination.

8. The molding product inspection device according to claim 6 or 7,
wherein a change in the processing load in the abnormality determination unit includes increasing the processing load on one or more divided regions (Rd) determined by the processing unit to be of relatively higher importance out of the plurality of divided regions (Rd), than the processing load on at least one of other divided regions (Rd).

9. The molding product inspection device according to any one of claims 6 to 8, further comprising:
a storage unit configured to hold reference appearance information relating to the appearance (Pe) of the molding product (MP) which is a reference of a quality product,
wherein the determination by the abnormality determination unit includes comparing each of the divided regions (Rd) of the target appearance information with each of corresponding divided regions (Rd) of the reference appearance information.

10. The molding product inspection device according to claim 9,
wherein the determination by the abnormality determination unit includes extracting a difference between the target appearance information and the reference appearance information in the divided region (Rd).

11. The molding product inspection device according to claim 10,
wherein the storage unit further stores reference difference information relating to a reference of a difference from the reference appearance information, and
in determining the presence or absence of the abnormality, the abnormality determination unit uses a comparison result between the extracted difference between the target appearance information and the reference appearance information, and the reference difference information.

12. The molding product inspection device according to claim 10 or 11,
wherein the target appearance information and the reference appearance information are image information relating to the appearance (Pe) of the molding product (MP), and
the difference is a difference in at least one element of a hue, brightness, and saturation.

13. An injection molding system (201) comprising:
an injection molding machine (1) configured to manufacture a molding product (MP) by injecting a molding material into a mold unit (101); and
the molding product inspection device according to any one of claims 1 to 12.

14. The injection molding system (201) according to claim 13, further comprising:
a molding product take-out machine (211) configured to take out a molding product (MP) from a mold unit (101);
a molding product conveyance machine (221) configured to convey the molding product (MP) taken out from the mold unit (101) by the molding product take-out machine (211); and
an image capturing device (231) configured to capture an image (301) of the molding product (MP).

## Patentansprüche

1. Formproduktinspektionsvorrichtung, die für eine Spritzgießmaschine (1) verwendet wird, die ein Formprodukt (MP) durch Einspritzen eines Formmaterials in eine Formeinheit (101) herstellt, wobei die Formproduktinspektionsvorrichtung umfasst:
eine Erfassungseinheit, die konfiguriert ist, Zielerscheinungsbildinformationen bezüglich eines Erscheinungsbilds (Pe) des Formprodukts (MP), das als ein Inspektionsziel dient, zu erfassen; und
eine Verarbeitungseinheit, die konfiguriert ist, das Erscheinungsbild (Pe) in den Zielerscheinungsbildinformationen in mehrere unterteilte Bereiche (Rd) zu unterteilen, und Wichtigkeit von jedem der unterteilten Bereiche (Rd) durch Gewichten zu bestimmen,
**dadurch gekennzeichnet, dass**
die Verarbeitungseinheit mehr maschinelles Lernen an einem oder mehr unterteilten Bereichen (Rd), von denen bestimmt wird, dass sie von relativ höherer Wichtigkeit sind als zumindest einer der anderen unterteilten Bereiche (Rd), aus den mehreren unterteilten Bereichen (Rd) durchführt.

2. Formproduktinspektionsvorrichtung gemäß Anspruch 1,
wobei das Gewichten in der Verarbeitungseinheit basierend auf Sichtlinieninformationen durchgeführt wird, die durch Sichtlinienmessung bei einer Inspektion des Formprodukts (MP), die durch einen Arbeiter durchgeführt wird, erhalten werden.

3. Formproduktinspektionsvorrichtung gemäß Anspruch 1 oder 2,
wobei das Gewichten in der Verarbeitungseinheit basierend auf Nutzereingabeinformationen durchgeführt wird, die durch einen Nutzer eingegeben werden.

4. Formproduktinspektionsvorrichtung gemäß Anspruch 3,
wobei die Nutzereingabeinformationen Gestaltungsoberflächeninformationen enthalten, die sich darauf beziehen, ob ein Erscheinungsbildabschnitt, der in einem vorbestimmten unterteilten Bereich (Rd) enthalten ist, eine Gestaltungsoberfläche des Formprodukts (MP) konfiguriert oder nicht.

5. Formproduktinspektionsvorrichtung gemäß einem der Ansprüche 1 bis 4,
wobei das Gewichten in der Verarbeitungseinheit basierend auf einer fehlerhaften Stelle des in der Vergangenheit hergestellten Formprodukts (MP) durchgeführt wird.

6. Formproduktinspektionsvorrichtung gemäß einem der Ansprüche 1 bis 5, ferner umfassend:
eine Abnormalität-Bestimmungseinheit, die konfiguriert ist, eine Verarbeitungslast, die erforderlich ist, um jeden der unterteilten Bereiche (Rd) zu bestimmen, gemäß der Wichtigkeit beim Bestimmen des Vorhandenseins oder Nichtvorhandenseins einer Abnormalität in den Zielerscheinungsbildinformationen zu verändern.

7. Formproduktinspektionsvorrichtung gemäß Anspruch 6,
wobei eine Änderung in der Verarbeitungslast in der Abnormalität-Bestimmungseinheit Ausschließen eines oder mehr unterteilter Bereiche (Rd), die durch die Verarbeitungseinheit aus den mehreren unterteilten Bereichen (Rd) als von relativ geringerer Wichtigkeit bestimmt werden, aus Zielen der Bestimmung beinhaltet.

8. Formproduktinspektionsvorrichtung gemäß Anspruch 6 oder 7,
wobei eine Änderung in der Verarbeitungslast in der Abnormalität-Bestimmungseinheit Erhöhen der Verarbeitungslast an einem oder mehr unterteilten Bereichen (Rd), die durch die Verarbeitungseinheit als von relativ höherer Wichtigkeit aus den mehreren unterteilten Bereichen (Rd) bestimmt werden, als die Verarbeitungslast an zumindest einen der anderen unterteilten Bereiche (Rd) umfasst.

9. Formproduktinspektionsvorrichtung gemäß einem der Ansprüche 6 bis 8, ferner umfassend:
eine Speichereinheit, die konfiguriert ist, Referenzerscheinungsbildinformationen bezüglich des Erscheinungsbilds (Pe) des Formprodukts (MP) vorzuhalten, das eine Referenz eines Qualitätsprodukts ist,
wobei die Bestimmung durch die Abnormalität-Bestimmungseinheit Vergleichen von jedem der unterteilten Bereiche (Rd) der Zielerscheinungsbildinformationen mit jedem der entsprechenden unterteilten Bereiche (Rd) der Referenzerscheinungsbildinformationen umfasst.

10. Formproduktinspektionsvorrichtung gemäß Anspruch 9,
wobei die Bestimmung durch die Abnormalität-Bestimmungseinheit Extrahieren einer Differenz zwischen den Zielerscheinungsbildinformationen und den Referenzerscheinungsbildinformationen in dem unterteilten Bereich (Rd) umfasst.

11. Formproduktinspektionsvorrichtung gemäß Anspruch 10,
wobei die Speichereinheit ferner Referenzdifferenzinformationen bezüglich einer Referenz einer Differenz von den Referenzerscheinungsbildinformationen speichert, und
beim Bestimmen des Vorhandenseins oder Nichtvorhandenseins der Abnormalität die Abnormalität - Bestimmungseinheit ein Vergleichsergebnis zwischen der extrahierten Differenz zwischen den Zielerscheinungsbildinformationen und den Referenzerscheinungsbildinformationen, und den Referenzdifferenzinformationen verwendet.

12. Formproduktinspektionsvorrichtung gemäß Anspruch 10 oder 11,
wobei die Zielerscheinungsbildinformationen und die Referenzerscheinungsbildinformationen Bildinformationen sind, die sich auf das Erscheinungsbild (Pe) des Formprodukts (MP) beziehen, und
die Differenz eine Differenz in zumindest einem Element von Farbton, Helligkeit und Sättigung ist.

13. Spritzgießsystem (201), umfassend:
eine Spritzgießmaschine (1), die konfiguriert ist, ein Formprodukt (MP) durch Einspritzen eines Formmaterials in eine Formeinheit (101) herzustellen; und
die Formproduktinspektionsvorrichtung gemäß einem der Ansprüche 1 bis 12.

14. Spritzgießsystem (201) gemäß Anspruch 13, ferner umfassend:
eine Formproduktentnahmemaschine (211), die konfiguriert ist, ein Formprodukt (MP) aus einer Formeinheit (101) zu entnehmen;
eine Formproduktfördermaschine (221), die konfiguriert ist, das durch die Formproduktentnahmemaschine (211) aus der Formeinheit (101) entnommene Formprodukt (MP) zu fördern; und
eine Bildaufnahmevorrichtung (231), die konfiguriert ist, ein Bild (301) des Formprodukts (MP) aufzunehmen.

## Revendications

1. Un dispositif d'inspection de produit de moulage utilisé pour une machine de moulage par injection (1) qui fabrique un produit de moulage (MP) en injectant un matériau de moulage dans une unité formant moule (101), le dispositif d'inspection de produit de moulage comprenant :
une unité d'acquisition configurée pour acquérir des informations d'aspect cibles relatives à un aspect (Pe) du produit de moulage (MP) servant de cible d'inspection ; et
une unité de traitement configurée pour diviser l'aspect (Pe) dans les informations d'aspect cibles en une pluralité de régions divisées (Rd), et déterminer l'importance de chacune des régions divisées (Rd) par pondération,
**caractérisé en ce que**
l'unité de traitement réalise une plus grande part d'apprentissage machine sur une ou plusieurs régions divisées (Rd) déterminées comme étant d'importance relativement plus élevée parmi la pluralité de régions divisées (Rd), qu'au moins l'une des autres régions divisées (Rd).

2. Le dispositif d'inspection de produit de moulage selon la revendication 1,
dans lequel la pondération dans l'unité de traitement est réalisée, sur la base d'informations de ligne visuelle obtenues par mesure de ligne visuelle dans une inspection du produit de moulage (MP) qui est réalisée par un ouvrier.

3. Le dispositif d'inspection de produit de moulage selon la revendication 1 ou 2,
dans lequel la pondération dans l'unité de traitement est réalisée, sur la base d'informations d'entrée utilisateur entrées par un utilisateur.

4. Le dispositif d'inspection de produit de moulage selon la revendication 3,
dans lequel les informations d'entrée utilisateur incluent des informations de surface de conception relatives au fait qu'une partie d'aspect incluse dans une région divisée (Rd) prédéterminée configure ou non une surface de conception du produit de moulage (MP).

5. Le dispositif d'inspection de produit de moulage selon l'une quelconque des revendications 1 à 4,
dans lequel la pondération dans l'unité de traitement est réalisée, sur la base d'un emplacement défectueux du produit de moulage (MP) fabriqué par le passé.

6. Le dispositif d'inspection de produit de moulage selon l'une quelconque des revendications 1 à 5, comprenant en outre :
une unité de détermination d'anomalie configurée pour modifier une charge de traitement nécessaire pour déterminer chacune des régions divisées (Rd) selon l'importance de détermination de la présence ou l'absence d'une anomalie dans les informations d'aspect cibles.

7. Le dispositif d'inspection de produit de moulage selon la revendication 6,
dans lequel une modification de la charge de traitement dans l'unité de détermination d'anomalie inclut l'exclusion d'une ou plusieurs régions divisées (Rd) déterminées par l'unité de traitement comme étant d'importance relativement plus faible parmi la pluralité de régions divisées (Rd), de cibles de la détermination.

8. Le dispositif d'inspection de produit de moulage selon la revendication 6 ou 7,
dans lequel une modification de la charge de traitement dans l'unité de détermination d'anomalie inclut l'augmentation de la charge de traitement sur une ou plusieurs régions divisées (Rd) déterminées par l'unité de traitement comme étant d'importance relativement plus élevée parmi la pluralité de régions divisées (Rd), que la charge de traitement sur au moins l'une d'autres régions divisées (Rd).

9. Le dispositif d'inspection de produit de moulage selon l'une quelconque des revendications 6 à 8, comprenant en outre :
une unité de stockage configurée pour contenir des informations d'aspect de référence relatives à l'aspect (Pe) du produit de moulage (MP) qui est une référence d'un produit de qualité,
dans lequel la détermination par l'unité de détermination d'anomalie inclut la comparaison de chacune des régions divisées (Rd) des informations d'aspect cibles avec chacune des régions divisées (Rd) correspondantes des informations d'aspect de référence.

10. Le dispositif d'inspection de produit de moulage selon la revendication 9,
dans lequel la détermination par l'unité de détermination d'anomalie inclut l'extraction d'une différence entre les informations d'aspect cibles et les informations d'aspect de référence dans la région divisée (Rd).

11. Le dispositif d'inspection de produit de moulage selon la revendication 10,
dans lequel l'unité de stockage stocke en outre des informations de différence de référence relatives à une référence d'une différence par rapport aux informations d'aspect de référence, et
lors de la détermination de la présence ou l'absence de l'anomalie, l'unité de détermination d'anomalie utilise un résultat de comparaison entre la différence extraite entre les informations d'aspect cibles et les informations d'aspect de référence, et les informations de différence de référence.

12. Le dispositif d'inspection de produit de moulage selon la revendication 10 ou 11,
dans lequel les informations d'aspect cibles et les informations d'aspect de référence sont des informations d'image relatives à l'aspect (Pe) du produit de moulage (MP), et
la différence est une différence dans au moins un élément d'une teinte, luminosité et saturation.

13. Un système de moulage par injection (201) comprenant :
une machine de moulage par injection (1) configurée pour fabriquer un produit de moulage (MP) en injectant un matériau de moulage dans une unité formant moule (101) ; et
le dispositif d'inspection de produit de moulage selon l'une quelconque des revendications 1 à 12.

14. Le système de moulage par injection (201) selon la revendication 13, comprenant en outre :
une machine de sortie de produit de moulage (211) configurée pour sortir un produit de moulage (MP) d'une unité formant moule (101) ;
une machine de transport de produit de moulage (221) configurée pour transporter le produit de moulage (MP) sorti de l'unité formant moule (101) par la machine de sortie de produit de moulage (211) ; et
un dispositif de capture d'image (231) configuré pour capturer une image (301) du produit de moulage (MP).
